# EUROPEAN PATENT APPLICATION

(11) **EP 1 253 369 A2**
(43) Date of publication of application: **30.10.2002**
(21) Application number: 02425257.9
(22) Date of filing: 22.04.2002
(51) Int. Cl.: F16P 1/00

(54) **A protective covering device for machinery and equipment**

(30) Priority: 27.04.2001 IT BO20010262
(71) Applicant: P.E.I. Protezioni Elaborazioni Industriali S.r.l., 40012 Calderara di Reno (Bologna) (IT)
(72) Inventor: Tabellini, Giorgio, 40037 Sasso Marconi (Bologna) (IT)
(74) Representative: Lanzoni, Luciano

(57) **Abstract**

A protective covering device (1) for machinery and equipment where a mobile tool (2) moves in at least one direction (D; D1, D2) along a defined path (P), comprises a set of cover elements (5, 6, 7, 8, 9; 5, 6, 7, 8) which are slidably coupled to each other and consist of a first cover element (5) attached to the machine or piece of equipment at an area to be protected, and a plurality of mobile cover elements (6, 7, 8, 9; 6, 7, 8) that move relative to each other and relative to the first cover element (5) along the defined path (P) followed by the tool (2). Each cover element (5, 6, 7, 8, 9; 5, 6, 7, 8) comprises an opening (5a, 6a, 7a, 8a, 9a; 5a, 6a, 7a, 8a) for the passage of the mobile tool (2) to which one (9; 8) of the mobile cover elements (6, 7, 8, 9; 6, 7, 8) is attached, and at least one pair of drive and/or stop flanges (5c, 5d, 6c, 6d, 7c, 7d, 8c, 8d, 9c, 9d; 5c, 5d, 6c, 6d, 7c, 7d, 8c, 8d) to move and/or stop the mobile cover elements (6, 7, 8, 9; 6, 7, 8). Between the flanges (5c, 5d, 6c, 6d, 7c, 7d, 8c, 8d, 9c, 9d; 5c, 5d 6c, 6d, 7c, 7d, 8c, 8d) facing each adjacent cover element (5, 6, 7, 8, 9; 5, 6, 7, 8) there is at least one energy dissipating element (15) to reduce the relative speed of the faster cover element (6, 7, 8, 9; 6, 7, 8) as it approaches the slower cover element (5, 6, 7, 8; 5, 6, 7) without allowing energy to return between the two elements (5, 6, 7, 8, 9; 5, 6, 7, 8), so as to avoid swinging and rocking of the mobile tool (2).

## Description

The present invention relates to a protective covering device for machinery and equipment.

More specifically, the invention relates to a protective covering device designed to cover and protect an open zone of a machine or piece of equipment in which a mobile tool works.

In particular, the protective covering device can be attached to the mobile tool, which moves in a working direction extending in a single direction or in two directions along two reference coordinates of a respective working plane.

The present specification describes devices for covering and protecting machine tools and the like, without thereby restricting the scope of the invention.

Protective covering devices of known type usually comprise a plurality of cover elements consisting of a set of substantially flat plates or panels, closed together in a pack and in contact with each other, each one overlapping the next. The first panel is fixed to the machine at the zone to be protected and is therefore the same size as that zone. The other panels can slide relative to one another, and all the panels relative to the first panel, in the same direction as that in which the mobile tool moves.

Starting with the fixed panel, all the panels are similar in shape and decrease in size down to the last panel in the set, which is attached to the mobile tool. Each cover panel has a substantially rectangular opening through which the mobile tool passes. More specifically, the opening in the first panel forms an area to be covered by the remaining mobile panels, whilst the openings in the mobile panels decrease in size starting from the one that faces the first panel.

The last panel in the set, that is to say, the cover panel in the outermost position, opposite the fixed first panel relative to the set of mobile panels, is attached to and drawn by the mobile tool. Each of the other mobile panels, between the first fixed one and the last one presents a flange, that is substantially perpendicular to the plane occupied by the panels themselves and that engages with and is drawn along by the corresponding flange on the mobile panel adjacent to it on the outside.

This allows the mobile panels to slide over each other.

Thus, as the mobile tool moves along its working path, the mobile panels in the different working positions cover corresponding, substantially rectangular portions of the area defined by the opening in the first panel.

In all protective covers of this kind, it is necessary to dampen the impact between the flanges of each pair of adjacent panels not only while the panels are moving but also when they reach an end position where all of them have moved to a single part of the area to be protected and are close together in a pack. In other words, when the flanges of two adjacent panels are close to contact, one of the two panels may be stationary or moving more slowly than the other. In both cases, it is necessary to gradually slow down the relative speed of the panels to prevent the flanges from impacting each other violently.

For this purpose, prior art teaches the use of damping devices such as rubber pads, elastic damping elements, springs and the like. Although such devices do effectively dampen the impact between consecutive flanges, they have the disadvantage of accumulating a great deal of the kinetic energy that accompanies the driving motion of each mobile panel and to return this energy uncontrollably, causing the panels making up the protective cover, and hence the mobile tool, to vibrate and oscillate relative to the required positioning point. This leads to machining errors and unreliability in machines equipped with this type of protective cover. This disadvantage is felt particularly strongly when the mobile tool used and the cover protecting it are large and heavy and/or work at high speeds.

At present, the problem is dealt with either by slowing down the machining cycle, at the cost of reducing the machine's output, or by applying brakes which slow down the panels when they are near the required positioning point. Both solutions are unsatisfactory.

The aim of the present invention is to overcome the above mentioned disadvantages.

Accordingly, the present invention provides a protective covering device for machinery and equipment equipped with a mobile tool that moves in at least one direction along a defined path; the device comprising a set of cover elements slidably coupled to each other and consisting of a first cover element attached to the machine or piece of equipment at an area to be protected, and a plurality of mobile cover elements that move relative to each other and relative to the first cover element along the defined path; one of the mobile cover elements being attached to the mobile tool and each cover element having an opening through which the mobile tool passes; the opening in the first cover element defining an area to be covered by the mobile cover elements; the device further comprising drive stop means to move the mobile cover elements, and being characterised in that between said drive stop means there are energy dissipating means designed to reduce the relative speed of two adjacent- cover elements as they approach each other without allowing energy to return between the two elements and thus preventing the mobile tool from swinging and rocking.

The technical characteristics of the invention, with reference to the above aim, are clearly described in the claims below and its advantages are apparent from the detailed description which follows, with reference to the accompanying drawings which illustrate preferred embodiments of the invention provided merely by way of example without restricting the scope of the inventive concept, and in which:
- Figure 1 is a schematic perspective view of a first embodiment of the protective device according to the present invention;
- Figure 1a is a schematic section view of a detail from Figure 1;
- Figure 2 is a longitudinal section view, along line II-II in Figure 1, of the device illustrated in Figure 1;
- Figure 3 is a schematic front view of a second embodiment of the protective device according to the present invention;
- Figure 4 is a schematic perspective view, with some parts cut away for clarity, of the device shown in Figure 3, sectioned longitudinally for clarity along line IV-IV in Figure 3;
- Figure 5 is another schematic perspective view of the device shown in Figure 3, sectioned longitudinally for clarity along line V-V in Figure 3; and
- Figure 6 is a schematic perspective view of yet another embodiment of the protective device according to the present invention.

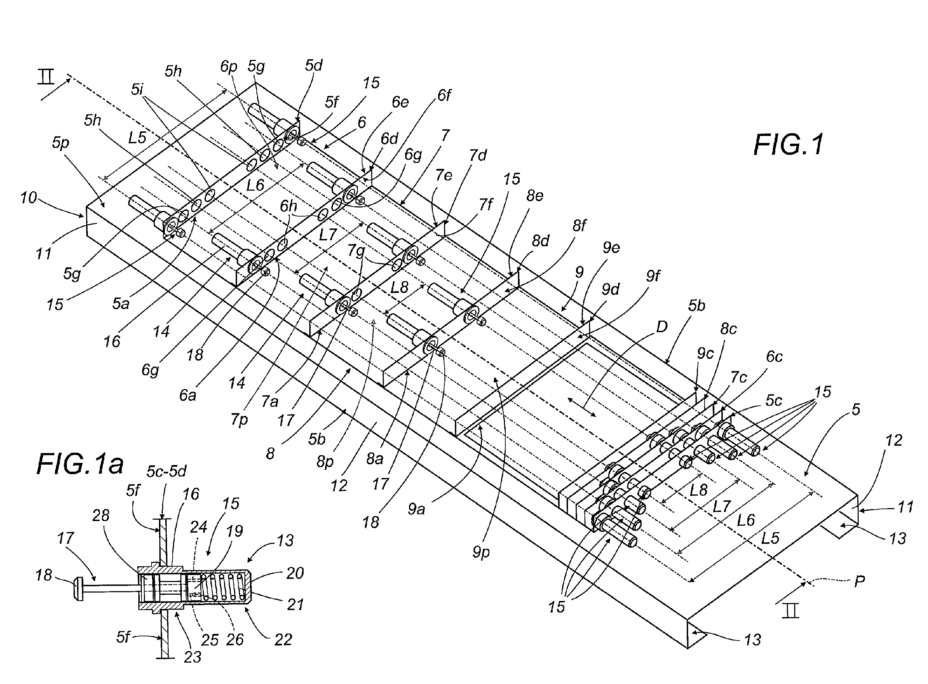

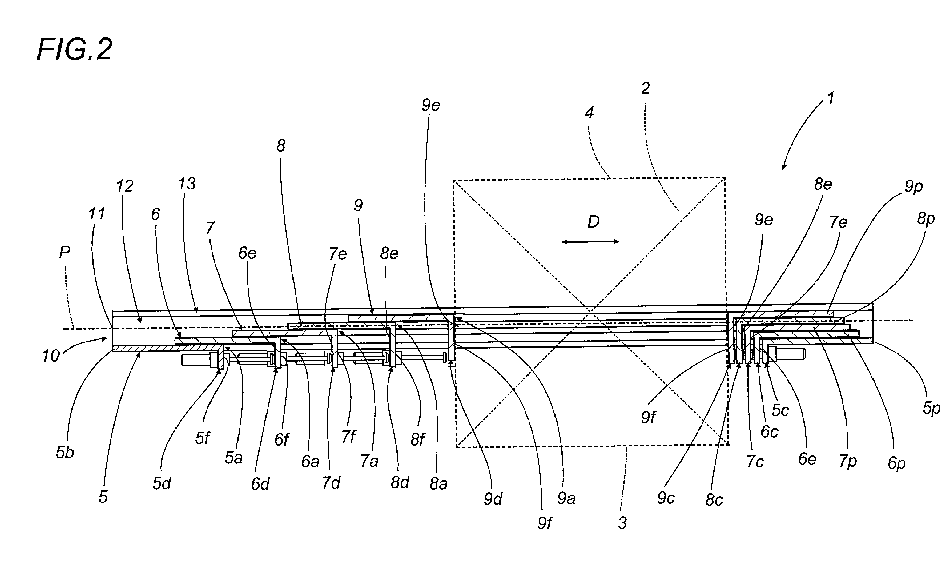

With reference to Figures 1 and 2, the numeral 1 denotes a protective covering device for machinery and equipment comprising a mobile tool 2 that moves both ways in a direction D along a defined straight path P. The tool 2 is illustrated schematically in Figure 2 as a block drawn with a dashed line.

In the embodiment illustrated in Figures 1 and 2, the tool 2 is part of a machine tool or similar machine (not illustrated) and the covering device 1 is attached to the tool 2 in such a way as to follow the latter's backward and forward motion along the path P, covering and protecting a corresponding area (not illustrated) of the machine tool. Looking in more detail, the tool 2 has a rear side 3, by which the tool 2 projects from the machine tool, and a working front 4 opposite the rear side 3 with respect to the device 1.

The device 1 comprises a set of cover elements which are slidably linked to each other and which consist of a first cover element 5 attached (in a way that not illustrated) to the machine frame at an area to be protected (not illustrated), and a plurality of mobile cover elements 6, 7, 8, 9 that move relative to each other and relative to the fixed first cover element 5 along the direction of motion D of the tool 2. Looking in more detail, of the mobile elements 6, 7, 8, 9, the element 6 is the closest to the area to be protected, while the element 9 is the furthest from from the area to be protected and is designed to engage with, and be drawn along by, the tool 2 as the latter moves along the path P.

The cover elements 5, 6, 7, 8, 9 are made preferably of metal - for example steel - and comprise respective flat cover panels 5p, 6p, 7p, 8p, 9p which are relatively thin, overlap each other and are rectangular in shape. More specifically, the panel 9p overlaps the panel 8p which overlaps the panel 7p; the latter overlaps the panel 6p, which in turn overlaps the panel 5p. The panel 5p faces the aforementioned area to to be protected.

In the direction at right angles to the direction D, all the panels 5p, 6p, 7p, 8p, 9p are the same size, whereas, along the direction D, the mobile panels 6p, 7p, 8p, 9p are smaller than the fixed panel 5p. Looking in more detail, along the direction D, the panels 6p, 7p, 8p, 9p decrease in size starting from the mobile cover element 6 down to the mobile cover element 9.

Besides the panel 5p, the element 5 comprises a retaining guide device 10 in which the mobile panels 6p, 7p, 8p, 9p slide relative to the fixed panel 5p. The device 10 comprises two tracks 11 each extending in the direction D along a respective longitudinal edge 5b of the panel 5p. More specifically, each track 11 is defined partly by the respective edge 5b, and partly by a first and a second wing 12, 13. The wing 12 extends at right angles from the edge 5b on the side opposite the area to be protected, while the wing 13 extends at right angles from the wing 12 towards the inside of the panel 5p. The gap between the wing 13 and the panel 5p only just exceeds the total thickness of the set of mobile panels 6p, 7p, 8p, 9p.

Each cover panel 5p, 6p, 7p, 8p, 9p has a central rectangular opening 5a, 6a, 7a, 8a, 9a through which the tool 2 can pass. Of these, the opening 5a in the element 5 defines an area to be covered by the mobile cover elements 6, 7, 8, 9 as they move to different working positions following the movement of the tool 2 along the path P.

In the direction at right angles to the direction D, all the openings 5a, 6a, 7a, 8a, 9a are the same size, whereas, along the direction D, the openings 6a, 7a, 8a, 9a of the mobile elements 6, 7, 8, 9 are smaller than the opening 5a. Looking in more detail, along the direction D, the openings 6a, 7a, 8a, 9a decrease in size starting from the mobile cover element 6 down to the mobile cover element 9. Besides the respective panel 5p, 6p, 7p, 8p, 9p, each of the cover elements 5, 6, 7, 8, 9 comprises two flanges, respectively first and second, 5c, 5d, 6c, 6d, 7c, 7d, 8c, 8d, 9c, 9d, which are located at the transversal edges opposite the corresponding openings 5a, 6a, 7a, 8a, 9a and extend at right angles from the respective panels 5p, 6p, 7p, 8p, 9p on the same side as the area to be protected.

Each of the flanges 6c, 6d, 7c, 7d, 8c, 8d, 9c, 9d of each mobile element 6, 7, 8, 9 defines a face 6e, 7e, 8e, 9e that engages with a corresponding stop face 5f, 6f, 7f, 8f of a flange 5c, 5d, 6c, 6d, 7c, 7d, 8c, 8d of the adjacent cover element 5, 6, 7, 8 in such a way as to drive and stop the elements 6, 7, 8, 9 themselves along the direction D. More specifically, the faces 6e, 7e, 8e, 9e are designed to engage with the faces 5f, 6f, 7f, 8f indirectly, as explained in more detail below, and the engagement face 6e, 7e, 8e, 9e of each flange 6c, 6d, 7c, 7d, 8c, 8d, 9c, 9d faces the outside of the corresponding opening 6a, 7a, 8a, 9a.

The elements 6, 7, 8, 9 are stopped by the two, longitudinally opposite stop faces 5f of the flanges 5c and 5d of the element 5, whilst the faces 9f of the flanges 9c, 9d facing the inside of the opening 9a constitute the engagement surfaces by which the element 9 is directly driven by the tool 2, the latter extending through the opening 9a and being attached and sealed to the element 9 (in a customary manner which is not illustrated) along the perimetric edges of the opening 9a itself.

Between each face 6e and the corresponding face 5f there is an energy dissipating device 14 mounted in a fixed position on the respective flange 5c, 5d.

The device 14 comprises a pair of energy dissipating elements 15 positioned close to the edges of the flange 5c, 5d, at a defined distance L5 from each other and designed to reduce the speed of the element 6, when the latter comes close to the fixed element 5, without allowing energy to return between the two elements 5 and 6 when the element 6 stops.

As illustrated in Figure 1a, which shows by way of example only one of the many types of energy dissipator that can be used, each element 15 is a decelerator comprising a cylindrical body 16 with a piston 17 sliding inside it. One end 18 of the piston 17, outside the body 16, is designed to strike the face 6e so as to exert on it a resistant dissipative force correlated to the compressive force applied by the face 6e itself on the piston 17. The head 18 may include an elastic pad to further dissipate energy upon impact.

At the end of the piston 17 opposite the end 18, there is an end 19 which is designed to slide inside the body 16 and which is spaced from the bottom of the end wall 20 of the body 16 by a helical spring 21. Within the body 16, the end 19 forms and separates two chambers 22 and 23, containing a fluid, for example, oil. Of the two chambers 22 and 23, the chamber 22 is partly delimited by the above mentioned end wall 20.

The two chambers 22 and 23 communicate through an orifice 24 and through a return duct 25 inside which a ball check valve 26 is fitted. Both the orifice 24 and the duct 25 are made in the end 19 following the direction of motion of the piston 17. The chamber 22 houses the spring 21, whilst the chamber 23 houses an accumulator 27 made of closed-cell foam. The accumulator 27 is located in the body 16 on the side opposite the end wall 20 where there is an annular seal 28 that is slidably coupled with the piston 17.

Each of the two dissipating elements 15 of the energy dissipating device 14 positioned between each face 6e and the corresponding face 5f is supported by the flange 5c, 5d in a position where the cylindrical body 16 projects from the flange 5c, 5d on the side of the flange 5c, 5d itself facing away from the face 6e. In this position, the piston 17 extends from the face 5f towards the face 6e.

Similarly, between each face 7e and the corresponding face 6f there is an energy dissipating device 14 of the same kind as that described above mounted in a fixed position on the respective flange 6c, 6d.

The energy dissipating elements 15 of the device 14 are, in this case too, positioned along the flange 6c, 6d, but at a distance L6 from each other that is smaller than the distance L5, and they are designed to reduce the speed of the element 7, when the latter comes close to the element 6, without allowing energy to return between the two elements 6 and 7 when the element 7 stops against the element 6.

Each of the two dissipating elements 15 is supported by the flange 6c, 6d in a position where the cylindrical body 16 projects from the flange 6c, 6d on the side of the flange 6c, 6d itself facing away from the face 7e. In this position, the piston 17 extends from the face 6f towards the face 7e.

Each of the flanges 5c and 5d presents a pair of first through holes 5g made between the relative dissipating elements 15 at a distance from each other equal to the distance L6 and designed to receive the bodies 16 of the elements 15 supported by the flanges 6c, 6d facing the flanges 5c and 5d themselves.

Similarly, between each face 8e and the corresponding face 7f there is an energy dissipating device 14 of the same kind as those described above mounted in a fixed position on the respective flange 7c, 7d.

The dissipating elements 15 of the device 14 are, in this case too, positioned along the flange 7c, 7d, but at a distance L7 from each other that is smaller than the distance L6, and they are designed to reduce the speed of the element 8 when the latter comes close to the element 7, without allowing energy to return between the two elements 7 and 8 when the element 8 stops against the element 7.

Each of the two dissipating elements 15 is supported by the flange 7c, 7d in a position where the cylindrical body 16 projects from the flange 7c, 7d on the side of the flange 7c, 7d itself facing away from the face 8e. In this position, the piston 17 extends from the face 7f towards the face 8e.

Each of the flanges 6c and 6d presents a pair of first through holes 6g made between the relative dissipating elements 15 at a distance from each other equal to the distance L7 and designed to receive the bodies 16 of the elements 15 supported by the flanges 7c, 7d facing the flanges 6c and 6d themselves.

Lastly, between each face 9e and the corresponding face 8f there is an energy dissipating device 14 of the same kind as those described above mounted in a fixed position on the respective flange 8c, 8d.

The energy dissipating elements 15 of the device 14 are, in this case too, positioned along the flange 8c, 8d, but at a distance L8 from each other that is smaller than the distance L7, and they are designed to reduce the speed of the element 9 when the latter comes close to the element 8, without allowing energy to return between the two elements 8 and 9 when the element 9 stops against the element 8.

Each of the two dissipating elements 15 is supported by the flange 8c, 8d in a position where the cylindrical body 16 projects from the flange 8c, 8d on the side of the flange 8c, 8d itself facing away from the face 9e. In this position, the piston 17 extends from the face 8f towards the face 9e.

Each of the flanges 7c and 7d presents a pair of through holes 7g made between the relative dissipating elements 15 at a distance from each other equal to the distance L8 and designed to receive the bodies 16 of the elements 15 supported by the flanges 8c, 8d respectively facing the flanges 7c and 7d themselves.

Each of the flanges 5c and 5d presents a pair of second through holes 5h made between the first holes 5g at a distance from each other equal to the distance L7 and designed to receive the bodies 16 of the elements 15 supported by the corresponding flanges 7c, 7d. Each of the flanges 5c and 5d also presents a pair of third through holes 5i made between the second holes 5h at a distance from each other equal to the distance L8 and designed to receive the bodies 16 of the elements 15 supported by the corresponding flanges 8c, 8d.

Similarly, each of the flanges 6c, 6d presents a pair of second through holes 6h made between the first holes 6g at a distance from each other equal to the distance L8 and designed to receive the bodies 16 of the elements 15 supported by the corresponding flanges 8c, 8d.

Thus, the holes 7g are aligned with the holes 6h and 5i, while the holes 6g are aligned with the holes 5h.

During use, the movement of the tool 2 along the path P, in either of the two senses of the direction D and starting from an end position on the path P, causes one face 9e, 8e, 7e, 6e to move closer to the face 8f, 7f, 6f, 5f opposite it. The faces 9e, 8e, 7e, 6e then strike the ends 18 of the pistons 17 opposite them, and the dissipating elements 15 convert the kinetic energy of the mobile elements 6, 7, 8, 9 and of the tool 2 into heat energy that is dispersed in the environment through the cylindrical bodies 16 of the elements 15 themselves. Thus, the mobile elements 6, 7, 8, 9 are slowed and gradually stopped without causing the tool 2 to swing or rock.

More specifically, during the compression stage of the piston 17, the spring 21 inside the dissipating element 15 is compressed and the fluid is forced out of the chamber 22 into the chamber 23 through the orifice 24. As it goes through the orifice 24, the fluid is heated and the heat energy is transferred to the cylindrical body 16 which disperses it in the surrounding environment. During this compression stage, the accumulator 27 made of closed cell foam is compressed, yielding volume to the fluid under pressure.

During the extension stage of the piston 17, the spring 21 is extended to return the piston 17 to its initial position, the valve 26 opens and the fluid flows back from the chamber 23 to the chamber 22 through the duct 25. During this extension stage, the accumulator 27 made of closed cell foam expands and recovers its original shape.

In the position where the flanges 5c, 6c, 7c, 8c, 9c, or the flanges 5d, 6d, 7d, 8d, 9d, are closed together in a pack, with the pistons 17 in their positions of maximum compression, the bodies 16 on the flanges 8c, 8d pass through the holes 7g, 6h and 5i in succession, the bodies 16 on the flanges 7c, 7d through the holes 6g and 5h in succession, and the bodies on the flanges 6c, 6d through the holes 5g.

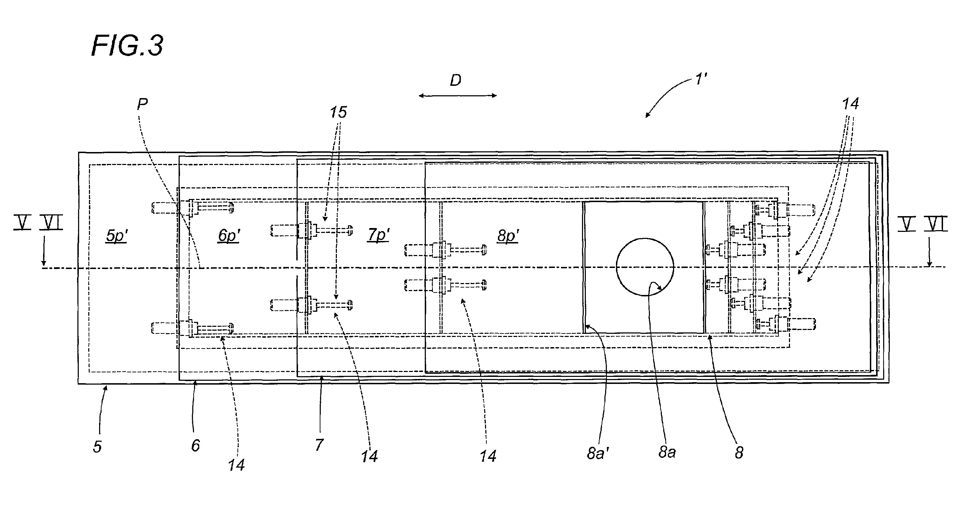

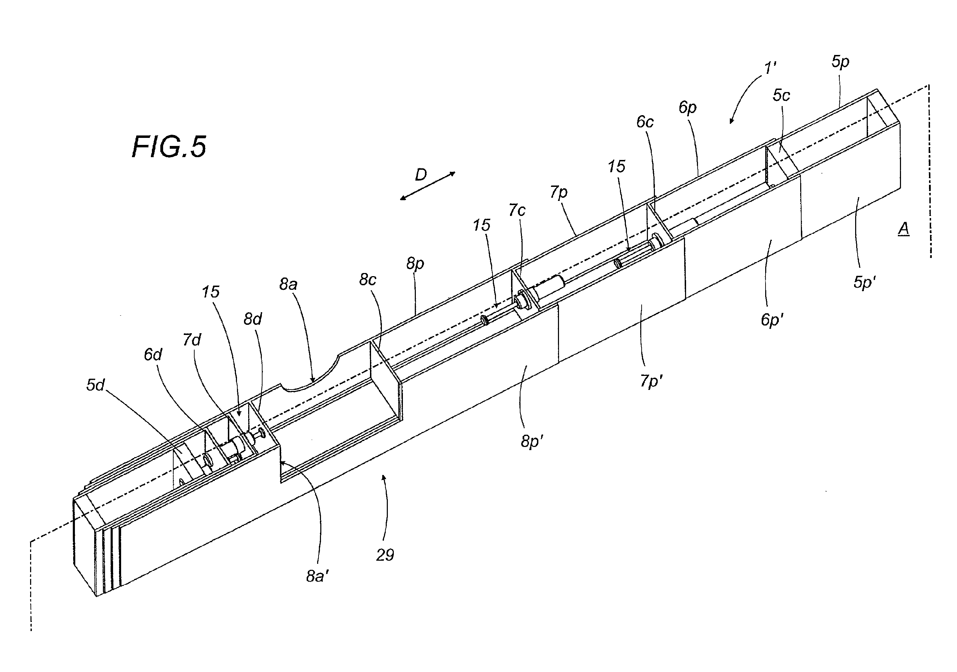

Figures 3, 4 and 5 show another embodiment of the protective covering device according to the invention. For convenience, the embodiment of the device shown in Figures 3, 4 and 5 is labelled 1', but the parts of it corresponding or similar to those already described with reference to Figures 1 and 2 are denoted by the same reference numbers as those shown in Figures 1 and 2.

In particular, the device 1' differs from the device 1 in that it does not have the tracks 11 and the mobile element 9 and in that the opening 8a is circular.

In this embodiment, the tool 2 is attached to the mobile element 8 and in the same way as described with reference to Figures 1 and 2.

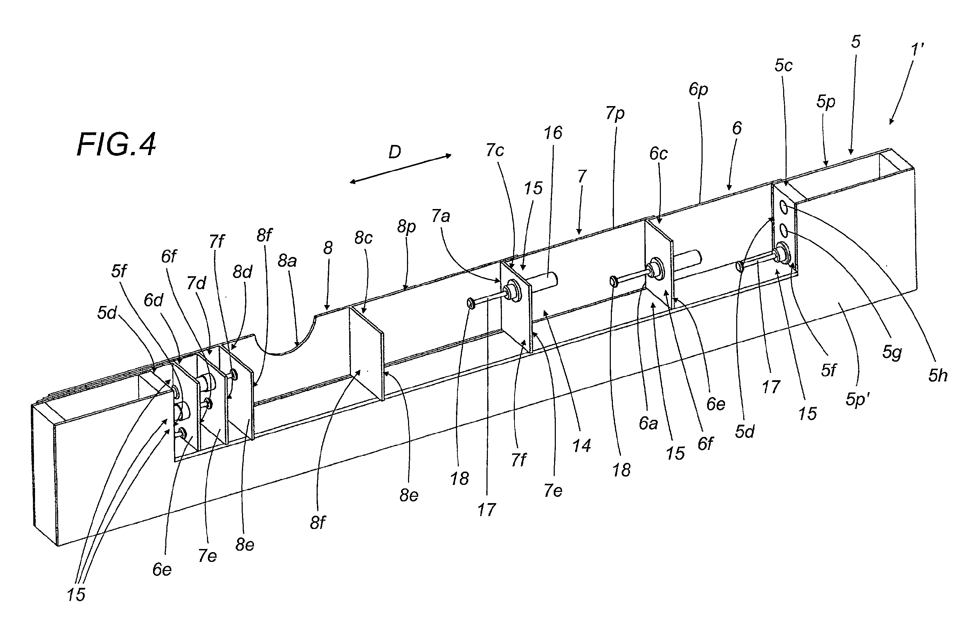

In this case, the flanges 5c, 5d, 6c, 6d, 7c, 7d, 8c, 8d have an additional function compared to those of the device 1 since they also support respective panels 5p', 6p', 7p', 8p' positioned on the side opposite the area to be protected and being substantially parallel to and mirrored with respect to the panels 5p, 6p, 7p, 8p. More specifically, the panel 8p' presents a central opening 8a' that is larger in area than the opening 8a and concentric with the opening 8a itself, while the panels 5p', 6p', 7p' present respective central openings which are mirrored with respect to the openings 5a, 6a, 7a in the respective panels 5p, 6p, 7p. In Figure 4, the panels 6p', 7p', 8p' have been cut away for clarity.

In this configuration of substantial symmetry about a plane A parallel to the panels 5p, 5p', 6p, 6p', 7p, 7p', 8p, 8p', the flanges 5c, 5d, 6c, 6d, 7c, 7d, 8c, 8d and the panels 5p', 6p', 7p', 8p' in their entirety constitute retaining guide means 29 allowing the mobile panels 6p, 7p, 8p to slide relative to each other and allowing the mobile panels 6p, 7p, 8p to slide relative to the fixed panel 5p.

In a variant of the device 1' that is not illustrated, the panels 5p', 6p', 7p', 8p' are smaller in size in a direction transversal to the direction D and, more specifically, are the same size as the flanges 5c, 5d, 6c, 6d, 7c, 7d, 8c, 8d.

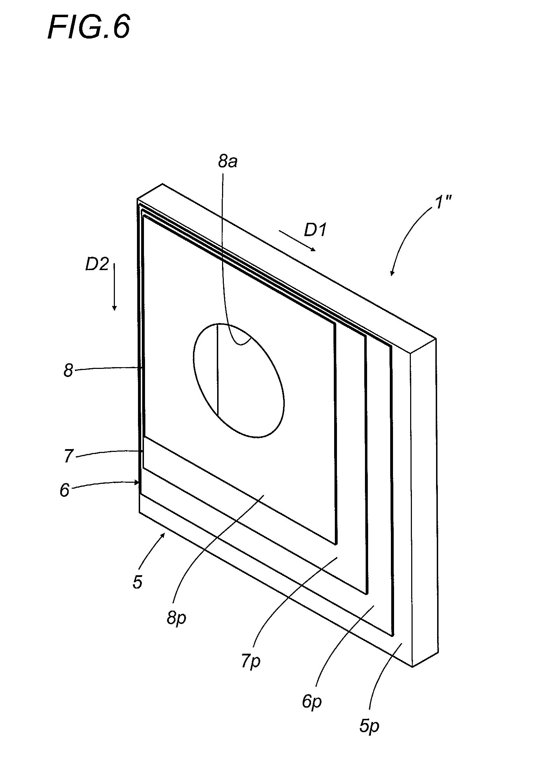

Figure 6 shows yet another embodiment of the protective covering device according to the invention. For convenience, the embodiment of the device shown in Figure 6 is labelled 1'', but the parts of it corresponding or similar to those already described with reference to the figures which illustrate the devices 1 and 1' are denoted by the same reference numbers as those shown in the figures illustrating the devices 1 and 1'.

In this embodiment, too, as for the device 1', the tool 2 is attached to the mobile element 8 in the same way as described above, but in this case, it can move in two directions D1 and D2 at right angles to each other.

In this embodiment, the dissipating elements 15, which are not illustrated in detail, are twice as many as those in the embodiment of the device illustrated in Figures 3, 4 and 5, since they are provided for each cover element 5, 6 and 7 in both directions D1 and D2 in which the tool 2 moves.

It will be understood that the invention, of which only some embodiments have been described, may be modified and adapted in several ways without thereby departing from the scope of the inventive concept. Moreover, all the details of the invention may be substituted by technically equivalent elements.

For example, the decelerating and dissipating devices 15, in addition to being of the type with a single orifice 24 as described above, may be of the type with two or more orifices in such a way as to exert a resistant decelerating and dissipative force that is directly proportional to the stroke of the corresponding piston 17 during the compression stage.

## Claims

1. A protective covering device for machinery and equipment equipped with a mobile tool (2) that moves in at least one direction (D; D1, D2) along a defined path (P); the device (1) comprising a set of cover elements (5, 6, 7, 8, 9; 5, 6, 7, 8) slidably coupled to each other and consisting of a first cover element (5) attached to the machine or piece of equipment at an area to be protected, and a plurality of mobile cover elements (6, 7, 8, 9; 6, 7, 8) that move relative to each other and relative to the first cover element (5) along the defined path (P); one (9; 8) of the mobile cover elements (6, 7, 8, 9; 6, 7, 8) being attached to the mobile tool (2) and each cover element (5, 6, 7, 8, 9; 5, 6, 7, 8) having an opening (5a, 6a, 7a, 8a, 9a; 5a, 6a, 7a, 8a) through which the mobile tool (2) passes; the opening (5a) in the first cover element (5) defining an area to be covered by the mobile cover elements (6, 7, 8, 9; 6, 7, 8); the device (1) further comprising drive stop means (6c, 6d, 7c, 7d, 8c, 8d, 9c, 9d; 6c, 6d, 7c, 7d, 8c, 8d) to move the mobile cover elements (6, 7, 8, 9; 6, 7, 8), and being **characterised in that** between said drive stop means (6c, 6d, 7c, 7d, 8c, 8d, 9c, 9d; 6c, 6d, 7c, 7d, 8c, 8d) there are energy dissipating means (14) designed to reduce the relative speed of two adjacent cover elements (5, 6, 7, 8, 9; 5, 6, 7, 8) as they approach each other without allowing energy to return between the two elements (5, 6, 7, 8, 9; 5, 6, 7, 8), thus avoiding swinging and rocking of the mobile tool (2).

2. The device according to claim 1, **characterised in that** the energy dissipating means (14) comprise at least one decelerating element (15) designed to convert the kinetic energy of the adjacent cover elements (5, 6, 7, 8, 9; 5, 6, 7, 8) as they approach other into heat energy that is dispersed into the surrounding environment through the dissipating means (14) themselves.

3. The device according to claim 2, **characterised in that** each decelerating element (15) comprises a body (16) containing a fluid, with a piston (17) mounted slidably inside the body (16); the piston (17) having a first end (19) positioned inside the body (16) and forming, inside the body itself (16), two chambers (22, 23) containing the fluid; and the decelerating element (15) further comprising at least one orifice (24) forming a duct providing communication between the chambers (22, 23) to allow the fluid to pass from one chamber to the other as the piston (17) slides inside the body (16).

4. The device according to claim 3, **characterised in that** the orifice (24) is made in the first end (19) of the piston (17).

5. The device according to claim 3 or 4, **characterised in that** the piston (17) has a second end (18), positioned outside the body (16) and designed to strike the drive means (6c, 6d, 7c, 7d, 8c, 8d, 9c, 9d; 6c, 6d, 7c, 7d, 8c, 8d).

6. The device according to any of the foregoing claims from 2 to 5, **characterised in that** the energy dissipating means (14) comprise a plurality of the decelerating elements (15); said decelerating elements (15) being mounted on respective cover elements (5, 6, 7, 8; 5, 6, 7).

7. The device according to claim 6, **characterised in that** each of the cover elements (5, 6, 7, 8, 9; 5, 6, 7, 8) comprises a cover panel (5p, 6p, 7p, 8p, 9p; 5p, 6p, 7p, 8p) presenting a respective opening (5a, 6a, 7a, 8a, 9a; 5a, 6a, 7a, 8a) and at least one pair of drive and/or stop elements (5c, 5d, 6c, 6d, 7c, 7d, 8c, 8d, 9c, 9d; 5c, 5d, 6c, 6d, 7c, 7d, 8c, 8d) to move and/or stop the mobile cover elements (6, 7, 8, 9; 6, 7, 8).

8. The device according to claim 7, **characterised in that** the cover panels (5p, 6p, 7p, 8p, 9p; 5p, 6p, 7p, 8p) are flat and arranged in such a way that they overlap and slide; the drive and/or stop elements (5c, 5d, 6c, 6d, 7c, 7d, 8c, 8d, 9c, 9d; 5c, 5d, 6c, 6d, 7c, 7d, 8c, 8d) comprising respective drive and/or stop flanges (5c, 5d, 6c, 6d, 7c, 7d, 8c, 8d, 9c, 9d; 5c, 5d, 6c, 6d, 7c, 7d, 8c, 8d) extending at right angles from the respective cover panels (5p, 6p, 7p, 8p, 9p; 5p, 6p, 7p, 8p).

9. The device according to claim 8, **characterised in that** the decelerating elements (15) are mounted on the drive and/or stop flanges (5c, 5d, 6c, 6d, 7c, 7d, 8c, 8d; 5c, 5d, 6c, 6d, 7c, 7d).

10. The device according to any of the foregoing claims from 1 to 9, **characterised in that** the mobile cover elements (6, 7, 8, 9; 6, 7, 8) slide relative to each other and relative to the first cover element (5) to follow the tool (2) in a single direction of motion (D); the path (P) and the direction (D) being straight.

11. The device according to any of the foregoing claims from 1 to 10, **characterised in that** the mobile cover elements (6, 7, 8, 9; 6, 7, 8) slide relative to each other and relative to the first cover element (5) to follow the tool (2) in two directions of motion (D1, D2) which are straight and at right angles to each other.
